# EUROPÄISCHE PATENTSCHRIFT

(11) **EP 0 589 351 B1**
(45) Veröffentlichungstag und Bekanntmachung des Hinweises auf die Patenterteilung: **14.06.2000**
(21) Anmeldenummer: 93114894.4
(22) Anmeldetag: 16.09.1993
(51) Int. Cl.: C08J 5/12, B29C 65/00, B29C 59/16

(54) **Verfahren zum Heissverkleben von semikristallinen Polymeren mit Metallen**
Process for heat bonding of semi-crystalline polymers with metals
Procédé pour coller à chaud des polymères semi-cristallins avec des métaux

(30) Priorität: 23.09.1992 DE 4231810
(43) Veröffentlichungstag der Anmeldung: 30.03.1994
(73) Patentinhaber: Heitz, Johannes, Dr., 4040 Linz (AT); Bäuerle, Dieter, Prof. Dr., A-4040 Linz (AT); Hagemeyer, Alfred, Dr., 48431 Rheine (DE); Hibst, Hartmut, Prof. Dr., 69198 Schriesheim (DE)
(72) Erfinder: Heitz, Johannes, Dr., 4040 Linz (AT); Bäuerle, Dieter, Prof. Dr., A-4040 Linz (AT); Hagemeyer, Alfred, Dr., 48431 Rheine (DE); Hibst, Hartmut, Prof. Dr., 69198 Schriesheim (DE)

(56) Entgegenhaltungen:
- US-A- 5 032 209
- DATABASE WPI Derwent Publications Ltd., London, GB; AN 90-003344[01] & JP-A-1 286 212 (FURUKAWA ELECTRIC CO.) 17. November 1989

## Beschreibung

Die Erfindung betrifft ein Verfahren zum Heißverkleben von semikristallinen Polymeren mit Metallen unter Druck und bei einer zwischen dem Glas- und dem Erweichungspunkt des Polymeren liegenden Temperatur durch vorheriges Bestrahlen der Polymeroberfläche mit einer UV-Strahlung.

Die hohe mechanische Festigkeit vieler Polymere beruht auf der semikristallinen Struktur dieser Materialien. Solche semikristallinen Polymere bestehen aus einer Mischung amorpher und kristalliner Bezirke. Die kristallinen Bereiche sind weitgehend geordnet und umfassen Bereiche, in denen die Polymerketten durch Kettenfaltung der verschiedenen chemischen Bausteine, aus denen die Ketten aufgebaut sind, eine Gitterstruktur bilden. Demgegenüber befinden sich die Polymerketten in den ungeordneten amorphen Bereichen in Form zufallsbedingter Knäuel. Beim Erhitzen dieser semikristallinen Polymere über ihren Erweichungspunkt wird die kristalline Anordnung, wie Röntgenbeugungsuntersuchungen zeigen, zerstört. Ein sich an das Aufheizen anschließendes schnelles Abkühlen ergibt ein Material mit durchgängig amorphem Charakter.

Dieser Vorgang wurde bereits für das Auflaminieren von Polyethylenterephthalat (PET-)-Filmen auf verchromte Stähle genutzt (H. Yokoya und R.S. Poster, J. Appl. Polymer Sci., Vol. 44, 1679-1683 (1992)). Dabei wird das PET-Material auf Temperaturen oberhalb seines Schmelzpunkts erhitzt und unter Druck mit dem Stahl verklebt. Dieses Verfahren läßt sich jedoch immer dann nicht anwenden, wenn die spezifischen mechanischen Eigenschaften der semikristallinen Polymere auch nach einer Verklebung mit einem anderen Material von Bedeutung sind und benötigt werden.

Der Effekt der Amorphisierung von PET-Folien wurde ferner zur Verminderung des Reibungskoeffizienten bzw. zur Autoadhäsion eingesetzt. Bei semikristallinen Polymeren mit einem ausreichend großen Absorptionskoeffizienten, wie es bei u.a. PET der Fall ist, können durch Bestrahlung mit UV-Licht geeigneter Wellenlänge dünne amorphe Oberflächenschichten unter gleichzeitiger Kettenspaltung und Bildung oligomerer Bestandteile entstehen. Dies geschieht durch das Überhitzen der dünnen Oberflächenschicht, deren Dicke von wenigen bis einige Hundert Nanometer beträgt. So ist aus der US-A 4 868 006 bekannt, semikristalline PET-Folien mit der UV-Strahlung eines Excimer-Lasers von 193 oder 248 nm Wellenläng zu bestrahlen und die durch Schmelzen auf der Oberfläche entstehenden quasi-amorphen Bereiche anschließend einem Material, welches eine Kristallisation induziert, wie z.B. Aceton, Methylenchlorid oder Chloroform, auszusetzen um auf diese Weise Polyesterfilmoberflächen zu erhalten, deren statischer und kinetischer Reibungskoeffizient erniedrigt ist. In ähnlicher Weise wird gemäß US-A 4 822 451 vorgegangen. Hier dient die amorphe Oberflächenschicht u.a. zur Verringerung der optischen Reflexion, der Erhöhung der Transmission, der Verbesserung der Haftung von Beschichtungen sowie der Autoadhäsion.

JP-A-1 286 212 beschreibt ein Verfahren zur Herstellung eines Blei-Kunstoff Laminates mittels Klebeverpressung bei hoher Temperaturen. Die zu verklebenden Oberflächen werden mit UV-Sicht bestrahlt, da das entstehende Ozon die Oberflächen von störenden Verunreinigungen befreit.

Aufgabe der vorliegenden Erfindung war es nun ein Verfahren zum Heißverkleben von semikristallinen Polymeren mit Metallen bei höheren Temperaturen und unter Druck bereitzustellen, bei dem die mechanischen Eigenschaften des die Klebung bildenden semikristallinen Materials nicht nachteilig beeinflußt werden.

Es wurde nun gefunden, daß sich mit einem Verfahren zum Heißverkleben von semikristallinen Polymeren mit Metallen unter Druck und bei einer zwischen dem Glas- und dem Erweichungspunkt des Polymeren liegenden Temperatur durch Bestrahlung der zur Verklebung vorgesehenen Fläche des Polymers mit UV-Licht die Aufgabe lösen läßt, wenn die für die Verklebung vorgesehene Fläche mit einer durch den Zerfall von Excimeren erzeugten UV-Strahlung im Wellenlängenbereich von 120 bis 400 nm mit einer Energiedichte unterhalb der Ablationsschwelle bestrahlt wird.

In einer vorteilhaften Ausgestaltungsform des erfindungsgemäßen Verfahrens wird die UV-Strahlung durch einen inkohärenten UV-Excimerstrahler (Excimerlampe) als Strahlungsquelle erzeugt, wobei insbesondere die Wellenlängen 172 nm (Xe₂), 222 nm (KrCl), 308 nm (XeCl) zur Anwendung kommen.

Die gemäß dem erfindungsgemäßen Verfahren vorgenommene Bestrahlung des Polymeren im definierten Wellenlängenbereich der UV-Strahlung erfolgt mit einer für das jeweilige Polymere und die verwendete Wellenlänge unterhalb der Ablationsschwelle liegenden Energiedichte. Als Ablationsschwelle wird diejenige Energiedichte bezeichnet, bei der noch keine Ablation auftritt, d.h. bei der noch kein nennenswerter Materialabtrag erfolgt. Zu ihrer Bestimmung werden bei unterschiedlichen Energiedichten die Ablationsraten gemessen. Trägt man die Ablationsraten halblogarithmisch gegen die verwendeten Energiedichten auf, so ist der extrapolierte Schnittpunkt mit der Achse der Energiedichte als Ablationsschwelle definiert. Die Ablationsrate einer UV-Quelle kann beispielsweise dadurch bestimmt werden, daß eine der UV-Strahlung ausgesetzte Lochblende mit einer Linse auf das Polymere abgebildet wird, wobei je nach Energiedichte des UV-Strahls ein rundes Loch unterschiedlicher Tiefe in der Polymerfläche entsteht. In besonders einfacher Weise kann die Ablationsschwelle bei Verwendung eines UV-Lasers bestimmt werden. Dazu wird zuerst die gemessene Ätzrate als Verhältnis der jeweiligen Lochtiefe im Polymeren zur Pulsanzahl gemessen. Dieser Wert wird gegen den Logarithmus der Energiedichte, d.h. das Verhältnis der Pulsenergie zur Fläche des Lochs im Substrat aufgetragen. Der Schnittpunkt der Extrapolationsgeraden mit der Achse der Energiedichte definiert dann die Schwellenenergiedichte für die Ablation.

Die für das erfindungsgemäße Verfahren geeigneten semikristallinen Polymere sind bekannt. Es sind vorzugsweise Polyethylenterephthalat (PET), Polyimid (PI), Polyethylennaphthalat (PEN), Polyamid (PA), Polybutylenterephthalat (PBT), Polyacrylnitril (PAN), Poly-p-phenylene, Polyurethane (PUR) oder Polysulfone (PSU).

Die mit diesen Polymeren zu verklebenden Metalle sind vorwiegend Co, Cr, Ni, Pt oder deren Legierungen sowie Al, Cu, Fe, Stahl, Ag, Au, Ti, Zr, Zn oder Sn.

In einer bevorzugten Anwendung des erfindungsgemäßen Verfahrens liegen die zu verklebenden Metalle in Form sogenannter kohärenter Metalldünnschichten vor. Solche Metallschichten sind im allgemeinen Kobalt- oder Kobalt/Chrom-haltig, wie z.B. Co-Ni-Cr, Co-Pt, Co-Ni-O, Co-Cr mit 15 bis 35 At% Chrom, Kobalt-Nickel-Schichten mit mehr als 10 At% Nickel oder Kobalt-Nickel-Sauerstoff-Schichten mit mehr als 10 At% Nickelanteil und zwischen 3 und 45 At% Sauerstoff. Jedoch sind auch entsprechende Metalldünnschichten auf Basis von Eisen bekannt. Die Herstellung dieser Schichten geschieht mit Hilfe eines PVD-Verfahrens, d.h. z.B. durch Verdampfen, Elektronenstrahlverdampfen, Sputtern, Ionenplattieren oder Beschichtung der Metallkomponenten mit Lichtbogenverfahren. Bevorzugt sind das Aufdampfen und Sputtern. Die auf diese Weise hergestellten, oft ferromagnetischen Metallschichten sind zwischen 20 und 500 nm dick.

Die genannten Polymere werden nun gemäß dem erfindungsgemäßen Verfahren der UV-Strahlung eines inkohärenten UV-Excimerstrahlens mit einer unter der Ablationsschwelle liegenden Energiedichte ausgesetzt. Diese Schwellenenergiedichte ist wellenlängenabhängig und für die unterschiedlichen Polymere unterschiedlich. Für PET bewegt sie sich im allgemeinen in einem Bereich zwischen 10 und 200 mJ/cm². Die Bestrahlung kann im vakuum oder in einer Sauerstoff-, Stickstoff-, Argon-, Ammoniak- oder Freon-Atmosphäre (bis zu 1000 mbar) durchgeführt werden.

Eine besonders interessante Anwendung des erfindungsgemäßen Verfahrens bildet die Verwendung dünner semikristalliner UV-bestrahlter Polymerfolien als Heißklebefolien zum Beispiel in einem Schältest.

Ein Schältest ist eine bekannte Methode zur Haftungsbewertung von ausreichend dicken Deckschichten auf festen oder flexiblen Substraten. In diesem Test wird in einer Zugprüfmaschine die Beschichtung von den Spannbacken gegriffen und vom Substrat abgezogen und die dazu benötigte Schälkraft gemessen. Bei sehr dünnen Schichten von nur wenigen µm oder im Submikrometerbereich ist diese direkte Methode des Schältests allerdings nicht anwendbar, da die Schicht zu dünn ist, um von den Spannbacken der Zugprüfmaschine noch direkt gegriffen werden zu können. Man ist daher auf andere Methoden der Krafteinleitung in den Verbund angewiesen.

Ein bei dünnen Filmen häufig zur Anwendung kommender Standardtest ist der Scotch-tape-Test, bei dem ein andruckempfindliches Klebeband (Scotchband oder Tesafilm) auf die Beschichtung aufgeklebt und dann abgezogen wird. Allerdings ist die Klebkraft dieser handelsüblichen Klebebänder nicht ausreichend, um fest haftende Beschichtungen abziehen zu können.

Eine deutlich verbesserte Haftung der nachträglich aufgebrachten Hilfsfolien zur Beschichtung läßt sich durch die Verwendung von Heißklebefolien (Schmelzfolien) erzielen. Bei Metalldünnschichten auf z.B. Kunststoffsubstraten wird häufig der EAA-Peeltest angewandt [De Puydt et al.; Surf. Interf. Anal. 12 (1988), 486]: Dazu wird eine EAA-Heißklebefolie (Ethylene Acrylic Acid, VISTAFIX der Fa. UCB S.A., Gent B) in einer Thermopresse auf die Metallseite des Schichtsystems (z.B. flexibles magnetisches Dünnschichtmedium) auflaminiert (105°C, 75 kN/20 cm² Anpreßdruck, 20 s). Das Laminat wird anschließend in 1 cm breite Streifen geschnitten. Mittels eines doppelseitigen Klebebands wird die der EAA-Folie abgewandte Seite, also die Seite des Substrats, auf einen festen Metallträger (Al-Blech) aufgeklebt. In einer Zugprüfmaschine wird die EAA-Folie in die Spannbacken eingespannt und mit Zugkräften belastet. Es wird die Kraft gemessen, die zum Abschälen der Metallschicht vom Substrat unter einem festen Winkel von z.B. 180° zur Schichtebene nötig ist (180° - EAA-Schältest). Die Abzugsgeschwindigkeit beträgt typisch 50 mm/min. Als Maß für die Adhäsion der Metallschicht wird die auf die Breite des Streifens normierte Schälkraft in N/cm angegeben. Auf diese Weise werden zwar bessere Haftfestigkeiten zwischen Metall und Hilfsfolie und damit höhere mögliche Schälkräfte als beim Scotchband oder Tesafilm erzielt, jedoch haben die konventionellen Heißklebefolien den Nachteil einer nur mäßigen inneren Festigkeit und mechanischer Stabilität, so daß es bei sehr gut haftenden Beschichtungen leicht zum Überdehnen und Einreißen der Klebefolie während des Zugversuchs kommt. Die maximal meßbare Schälkraft und damit die obere Testgrenze beim EAA-Peeltest (Metalldünnschichten) liegt bei 4-5 N/cm, oberhalb der die innere Kohäsionskraft der EAA-Folie überschritten wird.

Zur Verbesserung des Schältests bei Metalldünnschichten ist eine Klebefolie gefragt, die ausreichend hohe Haftfestigkeit zum Metall mit ausreichender innerer Kohäsionsfestigkeit verbindet. Mechanisch stabile und belastbare Folien mit hoher Reißfestigkeit sind bekannterweise verstreckte PET-Folien. Verstrecktes PET ist zwar von hoher innerer Kohäsionsfestigkeit, jedoch ist es als semikristallines und hochmolekulares Material mit Metallen nicht direkt heiß zu verkleben oder zu verschweißen und durch einfaches Auflaminieren bei erhöhter Temperatur läßt sich keine Haftung zu Metallen erreichen. Die aufgezeigten Probleme lassen sich somit mit dem erfindungsgemäßen Verfahren in einfacher und vorteilhafter Weise lösen.

Die Erfindung sei anhand folgender Beispiele näher erläutert.

### Beispiel 1

Eine Mylar 200 D-PET-Folie wurde an Luft für 30 min mit einer KrCl-Excimerlampe (222 nm) mit einer Leistungsdichte von 5 mW/cm² bestrahlt. Anschließend wurde die Folie in einer Thermopresse bei 125°C für 20 s mit einem Druck von 190 bar auf die Metallseite einer mit einer 200 nm dicken (Co-Ni)-Schicht beschichteten Upilex-50R-PI-Folie aufgeschweißt. Die PET-Folie haftete so gut auf der (Co-Ni)-Schicht, daß die Folie beim Versuch sie abzuziehen riß.

In einem Referenztest wurde versucht, eine nichtbestrahlte PET-Folie unter denselben Bedingungen wie oben auf dieselbe mit (Co-Ni) beschichtete Upilex 50R-Folie aufzuschweißen. Dies war nicht möglich. Die unbestrahlte PET-Folie haftete nach dem Heißpressen nicht an der (Co-Ni)-Schicht.

## Patentansprüche

1. Verfahren zum Heißverkleben von semikristallinen Polymeren mit Metallen unter Druck und bei einer zwischen dem Glas- und dem Erweichungspunkt des Polymeren liegenden Temperatur durch Bestrahlung der zur Verklebung vorgesehenen Fläche des Polymeren mit UV-Licht, dadurch gekennzeichnet, daß die für die Verklebung vorgesehene Fläche mit einer durch den Zerfall von Excimeren mittels eines inkohärenten UV-Excimer-Strahlers erzeugten UV-Strahlung im Wellenlängenbereich von 120 bis 400 nm mit einer Energiedichte unterhalb der Ablationsschwelle bestrahlt wird, wobei es sich bei den Metallen um Co, Cr, Ni, Pt oder deren Legierungen sowie Al, Cu, Fe, Stahl, Ag, Au, Ti, Zr, Zn oder Sn handelt.

2. Verfahren nach Anspruch 1, dadurch gekennzeichnet, daß man als Polymer Polyethylenterephthalat, Polyimid, Polyethylennaphthalat, Polyamid, Polybutylenterephthalat, Polyacrylnitril, Poly-p-phenylen, Polyurethan oder Polysulfon verwendet.

3. Verfahren nach Anspruch 1 oder 2, dadurch gekennzeichnet, daß man das Metall in Form kohärenter Metalldünnschichten einsetzt.

4. Verfahren nach einem der Ansprüche 1 bis 3, dadurch gekennzeichnet, daß man die Bestrahlung in duft, im Vakuum, einer Sauerstoff-, Stickstoff-, Argon-, Ammoniak- oder Freon-Atmosphäre durchführt.

## Claims

1. A process for heat-sealing of semicrystalline polymers with metals under pressure and at a temperature between the glass transition temperature and the softening temperature of the polymer by exposing the area of the polymer to be bonded to UV radiation, wherein the area of the polymer to be bonded is exposed to UV radiation of a wavelength between 140 and 400 nm, generated by the decomposition of excimers using an incoherent excimer lamp, at a energy density below the ablation threshold and wherein the metals are Co, Cr, Ni, Pt or their alloys, as well as Al, Cu, Fe, steel, Ag, Au, Ti, Zr, Zn, or Sn.

2. A process as claimed in claim 1, wherein the polymers are selected from a group consisting of polyethylene terephthalate, polyimide, polyethylene naphthalate. polyamide, polybuthylene terephthalate, polyacrylonitrile, poly-p-phenylene, polyurethane, and polysulfone.

3. A process as claimed in claim 1 or 2, wherein the metal is in the form of coherent metal layers.

4. A process as claimed in one of the claims 1 to 3, wherein the exposure is carried out in air, in a vacuum, or in an atmosphere of oxygen, nitrogen, ammonia, or freon.

## Revendications

1. Procédé de collage à chaud et sous pression de polymères semicrystallins sur métal effectué à des temperatures situées entre les points de vitrification et de ramolissement des polymères, caractérisé par le fait qu'on soumet la zone du substrat polymère à coller à un rayonnement UV, produit par la décomposition d'excimères utilisant une source incohérente excimère, dans le domaine de longueurs d'onde de 120nm a 400nm avec une densité d'énergie inférieure au seuil d'ablation et caractérisé par le fait que les métaux utilisés sont Co, Cr, Ni, Pt et leurs alliages ainsi que Al, Cu, Fe, acier, Ag, Au, Ti, Zr, Zn, ou Sn.

2. Procédé selon la revendication 1, caractérisé par le fait que les polymères utilisés font partie du groupe poly-ethylene terephatalate, polyimide, poly-ethylene naphtalate, polyamide, poly-butylene terephtalate, poly-acrinitril, poly-p-phenil, poly-urethane ou bien poly-sulfon.

3. Procédé selon les revendications 1 et 2, caractérisé par le fait que les métaux utilisés sont sous une forme de fines couches minces cohérentes.

4. Procédé selon une des revendications 1 à 3, caractérisé par le fait que l'irradiation est conduite en atmosphère normale, sous vide ou bien dans une atmosphère d'oxygène, d'azote, d'argon, d'ammoniaque ou de fréon.
